# EUROPEAN PATENT APPLICATION

(11) **EP 4 773 262 A1**
(43) Date of publication of application: **08.07.2026**
(21) Application number: 24859304.8
(22) Date of filing: 31.07.2024
(51) Int. Cl.: H01M 8/0226, H01M 8/0213, H01M 8/0221, H01M 8/10, H01M 8/18

(54) **MANUFACTURING METHOD OF PRECURSOR FOR REGENERATED FUEL CELL SEPARATOR**

(30) Priority: 30.08.2023 JP 2023140043
(71) Applicant: Nisshinbo Chemical Inc., Tokyo 103-8650 (JP)
(72) Inventor: ARAKI, Tomoyuki, Chiba-city, Chiba 267-0056 (JP); OKEI, Takehiro, Chiba-city, Chiba 267-0056 (JP)
(74) Representative: Mewburn Ellis LLP
(86) International application number: PCT/JP2024/027282
(87) International publication number: WO 2025/047262

(57) **Abstract**

A manufacturing method of a precursor for a regenerated fuel cell separator includes: a step of preparing a slurry by mixing a precursor for a fuel cell separator containing graphite particles and a water-soluble resin with an aqueous solvent; and a step of drying the slurry. The manufacturing method uses a reusable material as precursor for the fuel cell separator, for example defective articles obtained during manufacturing and waste material generated during processing.

## Description

### TECHNICAL FIELD

The present invention relates to a method for manufacturing a reclaimed precursor for a fuel cell separator.

### BACKGROUND ART

One role of the fuel cell separator is to confer each unit cell with electrical conductivity. In addition, fuel cell separators provide flow channels for the supply of fuel and air (oxygen) to the unit cells and also serve as boundary walls separating the unit cells.

In general, the properties required of a fuel cell separator include gas (hydrogen and oxygen) impermeability, electrical conductivity, mechanical strength, durability (heat resistance, water resistance, acid resistance), thinness and lightness of weight, and shapeability.

Hitherto known methods for producing such fuel cell separators include methods that involve hot compression molding a sheet-like separator precursor.

For example, Patent Document 1 discloses a fuel cell separator which is obtained by compression molding a fuel cell separator precursor sheet which has a conductive substrate sheet, a dense layer containing a first type of graphite particle of given bulkiness and volume resistivity (conductivity) and a conductive layer containing a second type of graphite particle of given bulkiness and volume resistivity, and in which the dense layer and the conductive layer include a resin.

Patent Document 2 discloses a fuel cell separator obtained by using a molding machine equipped with a pair of dies in which a fuel cell separator shape has been engraved to thermoform a stampable sheet containing a conductive filler and a polymeric material.

Thus, there are many techniques for producing separators using a sheet-like precursor, yet no means for easily reusing a sheet-like precursor by way of an aqueous solvent (slurrification) has hitherto been known.

For example, Patent Document 1 teaches that the conductive layer can be created using a conductive layer-forming composition which includes a water-soluble resin as the binder, graphite and a resin. However, because a solution of a water-insoluble resin dissolved in a solvent is impregnated therein, the graphite becomes coated all around with the water-insoluble resin solution and fuses, making re-dissolution with an aqueous solvent and reuse by re-slurrification difficult.

Patent Document 2 uses a stampable sheet produced by a papermaking method from a suspension that includes a conductive filler and a polymeric material. However, during sheet formation, the material is pressed and thereby consolidated after high-temperature drying, as a result of which the polymer particles mutually bond and the polymeric material and conductive filler fuse together, making re-dissolution with an aqueous solvent and reuse by re-slurrification difficult.

Moreover, neither of these documents makes any mention of the reuse of a sheet-like precursor.

Also, in separators obtained from conventional sheet-like precursors, an insulating layer made of the water-insoluble resin tends to form both between graphite particles on the surface of the separator and at graphite particle surfaces, resulting in poor electrical conductivity.

Patent Document 3 discloses a coating composition which contains a carbon material, a water-soluble resin binder, a water-dispersible microparticulate resin binder and an aqueous liquid-like medium, and which is used on coated current-collecting plates for fuel cells. Patent Document 4 discloses a coating composition which contains a carbon material, a water-soluble resin bonder, a water-dispersible microparticulate resin binder and an aqueous liquid-like medium, and which is used in coated separators for fuel cells.

However, the compositions in Patent Documents 3 and 4 are coating compositions for coating the surface of a current-collecting plate or separator; they are not precursor sheets for fuel cell separators. Furthermore, not only are these coating compositions not formed into sheets and used as separator precursors, because they form water-resistant films following coating and drying, they cannot be re-dissolved in an aqueous solvent or re-slurrified and reused.

### PRIOR ART DOCUMENTS

### PATENT DOCUMENTS

Patent Document 1: JP 7056796
Patent Document 2: JP-A 2006-269313
Patent Document 3: JP-A 2016-183325
Patent Document 4: JP-A 2016-81717

### SUMMARY OF INVENTION

### TECHNICAL PROBLEM

The present invention was arrived at in light of the above circumstances. An object of the invention is to provide a method for producing a reclaimed precursor for a fuel cell separator in which, for example, defective product obtained during production and trimming waste generated during processing serve as materials that are reusable as a fuel cell separator precursor.

### SOLUTION TO PROBLEM

The inventors have conducted intensive investigations aimed at achieving the above objects. As a result, they have discovered that, because it is possible to re-slurrify in an aqueous solvent a fuel cell separator precursor containing graphite particles and a water-soluble resin, defective product obtained during production and trimming waste generated during processing can be easily reused. This discovery ultimately led to the present invention.

Accordingly, this invention provides:
1. A method for producing a reclaimed precursor for a fuel cell separator, which method includes the steps of preparing a slurry by mixing a fuel cell separator precursor containing graphite particles and a water-soluble resin with an aqueous solvent, and drying the slurry;
2. The method of 1 above for producing a reclaimed precursor for a fuel cell separator, wherein the fuel cell separator precursor contains a granular or fibrous water-insoluble resin.
3. A method for producing a fuel cell separator, which method includes the step of molding the reclaimed precursor for a fuel cell separator obtained by the method of 1 or 2 above; and
4. The method of 3 above for producing a fuel cell separator, wherein the molding step is a hot compression molding step.

### ADVANTAGEOUS EFFECTS OF INVENTION

According to this invention, because defective product obtained during the production of fuel cell separator precursors and trimming waste generated during processing can be re-slurrified and reprocessed again into fuel cell separator precursors, production losses can be reduced.

### DESCRIPTION OF EMBODIMENTS

The invention is described in detail below.

The inventive method for producing a reclaimed precursor for a fuel cell separator (abbreviated below as "reclaimed precursor") is characterized by including the steps of preparing a slurry by mixing a fuel cell separator precursor containing graphite particles and a water-soluble resin (abbreviated below as "precursor") with an aqueous solvent, and drying the prepared slurry.

### [1] Graphite Particles

The graphite particles making up the precursor used in the invention are not particularly limited; either natural graphite or synthetic graphite may be used.

Synthetic graphite particles suitably selected from those hitherto used in fuel cell separators may be used. Specific examples include synthetic graphite obtained by firing needle coke and synthetic graphite obtained by firing lump coke.

Natural graphite particles suitably selected from those hitherto used in fuel cell separators may be used. Specific examples include natural lump graphite and natural flake graphite.

These graphite particles may be of one type used alone or two or more types may be used in combination.

The shape of the graphite particles is not particularly limited, although a spherical or flaky shape is preferred from the standpoint of the electrical conductivity.

The mean particle diameter of the graphite particles is not particularly limited. However, to increase the electrical conductivity, the mean particle diameter is preferably from 5 to 200 µm, more preferably from 10 to 200 µm, even more preferably from 10 to 100 µm, and still more preferably from 10 to 50 µm. In this invention, the mean particle diameter refers to the median diameter (d₅₀) in particle size distribution measurement by the laser diffraction method (the same applies below).

### [2] Water-Soluble Resin

From the standpoint of uniformly dispersing the graphite particles and an optionally used granular or fibrous water-insoluble resin, and also rendering the dispersion once again into a precursor, the water-soluble resin preferably has dispersing properties, thickening properties and adhesive properties. In this invention, "water-soluble" signifies complete dissolution in 25°C water at a concentration of at least 1 wt%.

Specific examples of water-soluble resins include acrylic resins, polyvinyl resins, polyether resins, polyurethane resins, polyester resins, polyolefin resins, polyamide resins, polyimide resins, polyallylamine resins, phenolic resins, epoxy resins, phenoxy resins, urea resins, melamine resins, alkyd resins, formaldehyde resins, silicone resins, fluorocarbon resins and polysaccharides such as carboxymethylcellulose. These may be used singly or two or more may be used together. Of these, particularly from the standpoint of, with a small amount of addition, uniformly dispersing the graphite particles and an optionally used granular or fibrous water-insoluble resin, and also rendering the dispersion once again into a precursor, acrylic resins, polyvinyl resins, polyether resins and polysaccharides such as carboxymethylcellulose are preferred.

These water-soluble resins are available as commercial products.

The content of the water-soluble resin in the precursor used in this invention is not particularly limited, provided that the precursor can be re-slurrified. However, from the standpoint of the ease of re-slurrifying the precursor and the slurry dispersibility, the content per 100 parts by weight of graphite particles is preferably from 0.1 to 30.0 parts by weight, and more preferably from 0.5 to 25.0 parts by weight. To further increase the strength of the reclaimed precursor, the content is even more preferably from 1.0 to 25.0 parts by weight.

### [3] Granular or Fibrous Water-Insoluble Resin

It is preferable for a granular or fibrous water-insoluble resin to be included in the precursor used in this invention.

This water-insoluble resin is not particularly limited, so long as it is a resin which is granular or fibrous and does not dissolve in water. It may be a thermoplastic resin or a thermosetting resin.

The thermoplastic resin, in order to have a heat resistance that allows the granular or fibrous state to be retained during drying at the time of precursor production, is preferably a resin having a melting point or glass transition point of 100°C or more.

Specific examples include polyethylene, polypropylene, polyphenylene sulfide, polytetrafluoroethylene, tetrafluoroethylene-ethylene copolymers, polychlorotrifluoroethylene, polyamides, polyetherketone ether ketone ketone, polyetherketone, liquid-crystal polymers, polyimides, polyamide-imides, polyphenyl sulfones, polyether imides and polysulfones, polybutylene terephthalate, polyethylene naphthalate, ABS resins, polycycloolefins and polyether sulfones, as well as derivatives of these having a melting point of 100°C or more, and polycarbonates, polystyrenes and polyphenylene oxides, as well as derivatives of these having a glass transition point of 100°C or more. These may be used singly or two or more may be used in combination. The melting point or glass transition point has no particular upper limit, although from the standpoint of the productivity of the precursor and the fuel cell separator, the melting point or glass transition point is preferably not more than 300°C.

The thermosetting resin may be suitably selected from among those which have hitherto been commonly used as binder resins in carbon separators and the like.

Specific examples include phenolic resins, epoxy resins, furan resins, unsaturated polyester resins, urea resins, melamine resins, diallyl phthalate resins, bismaleimide resins, polycarbodiimide resins, silicone resins, vinyl ester resins and benzoxazine resins. These may be used singly or two or more may be used in combination. Of these, epoxy resins and phenolic resins are preferred on account of their excellent heat resistance and mechanical strength.

These water-insoluble resins are available as commercial products.

The particle shape of the water-insoluble resin is not particularly limited and may be of any shape, such as a spherical, flaky, blocky, foil-like, plate-like, needle-like or amorphous shape. However, from the standpoint of the packing qualities of the particles, a spherical shape is preferred.

The mean particle size of the water-insoluble resin also is not particularly limited. However, to increase the packing properties of the particles and lower the electrical resistance of the resulting fuel cell separator, a particle size of from 1 to 150 µm is preferred.

In cases where the precursor used in this invention includes a granular or fibrous water-insoluble resin, the content thereof is not particularly limited, provided that the precursor can be re-slurrified. However, from the standpoint of the ease of re-slurrification, the content per 100 parts by weight of graphite particles is preferably from 10.0 to 70.0 parts by weight, and more preferably from 15.0 to 65.0 parts by weight.

### [4] Other Ingredients

In addition to the above ingredients, the precursor used in the invention may also include other ingredients that are commonly used in fuel cell separators.

Examples of such other ingredients include internal mold release agents such as stearate waxes, amide waxes, montanate waxes, carnauba wax and polyethylene wax, conductive additives such as carbon black, and reinforcing agents such as carbon fibers. In particular, from the standpoint of further enhancing the strength of the reclaimed precursors and the separators obtained therefrom, it is preferable to include carbon fibers.

To make re-slurrification of the precursor even better, the content of such other ingredients is preferably from 0.1 to 10 parts by weight, more preferably from 0.1 to 5 parts by weight, and even more preferably from 0.1 to 3 parts by weight, per 100 parts by weight of the carbon particles.

### [5] Method for Producing Precursor

The precursor used in the invention can be obtained by, for example, coating or casting, and thus shaping, a precursor-forming slurry prepared by the dispersion in water of a composition containing graphite particles, an optionally used granular or fibrous water-insoluble resin and a water-soluble resin, and subsequently removing water by drying. In this way, by wet kneading and thus uniformly dispersing the ingredients and then shaping the resulting dispersion, void formation due to incomplete resin packing at the time of hot compression molding can be suppressed, enabling a higher gas impermeability to be obtained.

An example of a method for fabricating precursors by a coating process involves coating the slurry onto a plastic film such as PET film and drying the applied slurry, then peeling the dried slurry from the plastic film. The coating process is not particularly limited and may be suitably selected from among known methods such as spin coating, dipping, flow coating, inkjet coating, jet dispenser methods, spraying, bar coating, gravure coating, roll coating, transfer printing, brush coating, blade coating, air-knife coating, die coating and screen printing.

An example of a method for fabricating precursors by casting involves casting the slurry into a box-like mold and drying the slurry, then removing the dried slurry from the mold. By using at this time a mold having a shape that anticipates the raised and recessed features of the separator, it is possible to fabricate precursors having local differences in thickness, for which coating methods are poorly suited. The material making up the mold is not particularly limited, and may be suitably selected from known materials such as release-treated metal molds and plastic molds made of silicone, fluorocarbon resins or the like.

The slurry drying temperature is not particularly limited, so long as it is no higher than the melting point or glass transition point of the granular or fibrous water-insoluble resin when used, but is preferably not higher than 100°C, more preferably between room temperature and 100°C, and even more preferably between 50°C and 100°C.

The precursor used in this invention may have any shape. Various shapes, such as sheet-like or plate-like shapes, may be employed.

Alternatively, defective product formed during precursor production by the above-described method and trimming waste generated during processing may be used as the precursor.

Although the form of the precursor used in this invention is not particularly limited, it is preferable for at least some portion thereof to have a structure in which the graphite particles and the optionally used granular or fibrous water-insoluble resin are fixed by the water-soluble resin.

### [5] Method for Producing Reclaimed Precursor

A reclaimed precursor can be obtained by mixing together the above-described precursor and an aqueous solvent to prepare a slurry, and drying the resulting slurry.

Water or a mixed solvent of water and an organic solvent may be used as the aqueous solvent, although water is preferred.

The organic solvent is not particularly limited, provided that it is one which is soluble in water but does not dissolve the granular or fibrous water-insoluble resin. Examples include alcohols such as methanol and ethanol, and polyhydric alcohols such as diethylene glycol and glycerol. When an organic solvent is used, the amount thereof is preferably less than 50 wt%, more preferably less than 30 wt%, and even more preferably less than 15 wt%, of the aqueous solvent.

The method for mixing together the precursor and the aqueous solvent may entail adding the aqueous solvent to the precursor, or adding the precursor to the aqueous solvent.

The amount of aqueous solvent used is not particularly limited, so long as slurrification is possible. However, the amount is preferably such that the solids content within the slurry becomes about 1 to 80 wt%, more preferably 10 to 75 wt%, and even more preferably 30 to 70 wt%.

The precursor used in the invention is characterized in that the water-soluble resin re-dissolves on contact with water, enabling it to be easily slurrified. Hence, slurry preparation can be carried out at room temperature (between about 15°C and about 30°C). If necessary, the slurry may be heated to a degree at which the granular or fibrous water-insoluble resin does not melt. When heating is carried out, the temperature may be set to, for example, between about 50°C and about 80°C.

The method for obtaining a reclaimed precursor from the slurry involves using the coating method or casting method mentioned earlier in connection with precursor production to shape the slurry, and drying the slurry at a temperature similar to that during precursor production.

Because the reclaimed precursor of the invention can be rendered into a sheet merely by drying and removing the aqueous solvent from the slurry, it is easy to form not only sheets having a simple flat planar shape as in the prior art, but also sheets having raised and recessed shapes of differing thicknesses.

The thickness of the reclaimed precursor, although not particularly limited, is preferably from 100 µm to 1 mm, and more preferably from 200 to 800 µm.

The reclaimed precursor of the invention has a shape which is retained by the dried water-soluble resin and has a strength that enables it to be handled in the form of a sheet. At the same time, because the water-soluble resin re-dissolves on contact with water, slurrification can be carried out multiple times, enabling use without the loss of defective product formed during precursor production or of trimming waste generated during processing.

### [6] Fuel Cell Separator

A fuel cell separator can be produced by heating and molding the reclaimed precursor obtained as described above.

The molding method is not particularly limited, although compression molding is preferred.

The temperature at the time of compression molding is not particularly limited so long as it is a temperature that exceeds the melting point or glass transition point of the granular or fibrous water-insoluble resin, although a mold temperature of between 150°C and 250°C is preferred.

The molding pressure is preferably from 1 to 100 MPa, and more preferably from 1 to 60 MPa.

The compression molding time is not particularly limited, and may be suitably set to between 3 seconds and about 1 hour.

In cases where a granular or fibrous water-insoluble resin is included in the reclaimed precursor, hot compression molding causes the granular or fibrous water-insoluble resin to melt, giving a separator of the desired shape while filling voids and bonding the graphite particles. In this reclaimed precursor, the graphite particles are not coated beforehand with a water-insoluble resin as in the prior art and the formation of a resin layer on the separator surface during compression molding can be suppressed. As a result, the contact resistance and through-plane resistance are low, enabling a separator of good electrical conductivity and high gas impermeability to be obtained.

This provides in particular the following advantages: because the formation of a resin layer on the separator surface is suppressed, there is no need for a resin layer-removing step in order to enhance the conductivity; fine asperities are formed due to the increased percentage surface exposure of the graphite particles, improving the adhesion of gaskets and the like; and mold releasability at the time of hot compression molding improves.

A solid polymer fuel cell is generally composed of a stack of many unit cells, each of which is constructed of a solid polymer membrane disposed between a pair of electrodes that are in turn sandwiched between a pair of separators which form flow channels for the supply and removal of gases. The fuel cell separator of the invention may be used as some or all of the plurality of separators in the fuel cell.

### EXAMPLES

Examples of the invention and Comparative Examples are given below by way of illustration, although the invention is not limited by these Examples.

### [1] Fabrication of Reclaimed Precursor Sheets

### [Example 1-1]

A precursor sheet-forming slurry having a final solids concentration of 50 wt% was prepared by mixing together, expressed in terms of the solids ratios: 100 parts by weight of flaky graphite (particle size, 20 µm; the same applies below), 7.1 parts by weight of polyacrylic acid (molecular weight, 150,000; an aqueous solution having a solids concentration of 25 wt%; the same applies below) as the water-soluble resin, 35.7 parts by weight of granular phenolic resin (particle size, 25 µm; molecular weight, 10,000; the same applies below) as the granular water-insoluble resin, and water as the solvent.

This slurry was coated with a bar coater onto a release-treated PET film, dried within an 80°C forced-air dryer and, after drying, peeled from the PET film, giving a precursor sheet. The resulting precursor sheet had a thickness of 480 µm.

This precursor sheet was mixed with water and a reclaimed precursor sheet-forming slurry having a final solids concentration of 50 wt% was again prepared. Using a bar coater, this slurry was coated onto a release-treated PET film, dried within an 80°C forced-air dryer and, after drying, peeled from the PET film, giving a reclaimed precursor sheet. The resulting reclaimed precursor sheet had a thickness of 480 µm.

### [Example 1-2]

Aside from changing the granular water-insoluble resin from granular phenolic resin to powdered polypropylene (particle size, 15 µm), a reclaimed precursor sheet having a thickness of 480 µm was obtained in the same way as in Example 1-1.

### [Example 1-3]

Aside from changing the amount of polyacrylic acid to 1.4 parts by weight and the amount of granular phenolic resin to 33.8 parts by weight, a reclaimed precursor sheet having a thickness of 480 µm was obtained in the same way as in Example 1-1.

### [Example 1-4]

Aside from changing the amount of polyacrylic acid to 15.4 parts by weight and the amount of granular phenolic resin to 38.5 parts by weight, a reclaimed precursor sheet having a thickness of 480 µm was obtained in the same way as in Example 1-1.

### [Example 1-5]

Aside from changing the amount of polyacrylic acid to 6.4 parts by weight and the amount of granular phenolic resin to 21.8 parts by weight, a reclaimed precursor sheet having a thickness of 480 µm was obtained in the same way as in Example 1-1.

### [Example 1-6]

Aside from changing the amount of polyacrylic acid to 8.3 parts by weight and the amount of granular phenolic resin to 58.3 parts by weight, a reclaimed precursor sheet having a thickness of 480 µm was obtained in the same way as in Example 1-1.

### [Example 1-7]

Aside from changing the amount of polyacrylic acid to 7.2 parts by weight and the amount of granular phenolic resin to 36.1 parts by weight and additionally including 1 part by weight of carbon fibers (diameter, 7 µm; fiber length, 6 mm), a reclaimed precursor sheet having a thickness of 480 µm was obtained in the same way as in Example 1-1.

### [Comparative Example 1-1]

Aside from changing the amount of granular phenolic resin to 33.3 parts by weight and not including polyacrylic acid, a slurry was prepared in the same way as in Example 1-1. However, a precursor sheet could not be obtained.

### [Comparative Example 1-2]

The 480 µm thick precursor sheet obtained in Example 1-1 was milled five times for 10 seconds each time with a mill mixer (YMH400-W, from Yamazen Corporation). The milled powder was spread out on a metal mold and pressed at 130°C and 30 MPa for 1 minute, giving a reclaimed precursor sheet.

The above Examples and Comparative Examples are summarized in Table 1.

**[Table 1]**

| | | Example | | | | | | | Comp. Example | |
|---|---|---|---|---|---|---|---|---|---|---|
| | | 1-1 | 1-2 | 1-3 | 1-4 | 1-5 | 1-6 | 1-7 | 1-1 | 1-2 |
| Graphite | Flaky natural graphite (average particle size d50 = 20 µm) | 100 | 100 | 100 | 100 | 100 | 100 | 100 | 100 | 100 |
| Water-soluble resin | Polyacrylic acid (molecular weight, 150,000) | 7.1 | 7.1 | 1.4 | 15.4 | 6.4 | 8.3 | 7.2 | 0 | 7.1 |
| Water-insoluble granular resin | Granular phenolic resin (particle size, 25 µm; molecular weight, 10,000) | 35.7 | - | 33.8 | 38.5 | 21.8 | 58.3 | 36.1 | 33.3 | 35.7 |
| | Powdery polypropylene (particle size, 15 µm) | - | 35.7 | - | - | - | - | - | - | - |
| Water-insoluble non-granular resin | Phenolic resin dissolved in acetone | - | - | - | - | - | - | - | - | - |
| Additive | Carbon fibers (diameter, 7 µm; fiber length, 6 mm) | - | - | - | - | - | - | 1.0 | - | - |
| Slurry dispersibility | | ⊚ | ⊚ | ○ | ⊚ | ⊚ | ○ | Δ | × | ⊚ |
| Re-slurrification | | ⊚ | ⊚ | Δ | ⊚ | ⊚ | ○ | Δ | - | - |

The slurry dispersibility and re-slurrification in Table 1 were evaluated by the following methods.

### [Slurry Dispersibility]

The presence or absence of streaks and defects when the PET film was coated with the precursor sheet-forming slurry was visually assessed, the thickness was measured at six arbitrary points, and the dispersibility was evaluated according to the following criteria.

| | |
|---|---|
| ⊚: | No streaks or defects, and thickness variation of resulting precursor sheet is less than 3% |
| ○: | No streaks and defects, and thickness variation of resulting precursor sheet is at least 3% but less than 5% |
| Δ: | Surface unevenness due to streaks and defects is observable, and thickness variation of resulting precursor sheet is 5% or more |
| ×: | Pronounced streaks and defects present; precursor sheet cannot be obtained |

### [Re-slurrification]

Thirty grams of a precursor sheet sample was re-slurrified by addition to 30 mL of water and stirring, the presence or absence of streaks and defects when the slurry was coated onto a PET film was visually assessed, and evaluation was carried out according to the same criteria as for the slurry dispersibility above.

| | |
|---|---|
| ⊚: | No streaks or defects, and thickness variation of resulting reclaimed precursor sheet is less than 3% |
| ○: | No streaks and defects, and thickness variation of resulting reclaimed precursor sheet is at least 3% but less than 5% |
| Δ: | Surface unevenness due to streaks and defects is observable, and thickness variation of resulting reclaimed precursor sheet is 5% or more |
| ×: | Pronounced streaks and defects are present; reclaimed precursor sheet cannot be obtained |

### [2] Fabrication of Fuel Cell Separators

### [Example 2-1]

The reclaimed precursor sheet obtained in Example 1-1 was compression molded for 5 minutes at 180°C and 60 MPa using a flat-shaped mold, thereby giving a fuel cell separator. The separator molded in a flat shape had a thickness of 250 µm.

### [Example 2-2]

The reclaimed precursor sheet obtained in Example 1-2 was heated at 180°C for 10 minutes, after which it was cooled for 20 minutes while being compressed at 60 MPa using a flat-shaped mold, thereby giving a fuel cell separator. The separator molded in a flat shape had a thickness of 250 µm.

### [Examples 2-3 to 2-7, Comparative Example 2-1]

Aside from changing the reclaimed precursor sheet to those produced in Examples 1-3 to 1-7 and Comparative Example 1-2, fuel cell separators were obtained in the same way as in Example 2-1.

The electrical conductivity of the resulting fuel cell separators was measured by the following method and evaluated according to the criteria shown below. The results are shown in Table 2.

### [Electrical Conductivity]

A flat-plate separator was molded, one edge was sandwiched between 2 cm-sided gold-plated copper electrodes and 2.5 MPa of pressure was applied for 10 seconds, following which the pressure was lowered to 1.0 MPa and the interelectrode voltage when a constant current of 1 A/cm² was passed between the gold-plated copper electrodes was measured. The resulting interelectrode voltage was converted to a resistance and, treating this as the through-plane resistance of the separator (units: mΩ·cm²), the electrical conductivity was evaluated according to the following criteria.

| | |
|---|---|
| ⊚: | Through-plane resistance is less than 8 mΩ·cm² |
| ○: | Through-plane resistance is at least 8 mΩ·cm² but less than 10 mΩ·cm² |
| Δ: | Through-plane resistance is at least 10 mΩ·cm² but less than 15 mΩ·cm² |
| ×: | Through-plane resistance is 15 mΩ·cm² or more |

**[Table 2]**

| | Example | | | | | | | Comp. Example |
|---|---|---|---|---|---|---|---|---|
| | 2-1 | 2-2 | 2-3 | 2-4 | 2-5 | 2-6 | 2-7 | 2-1 |
| Conductivity | ⊚ | ⊚ | ⊚ | Δ | ⊚ | Δ | ⊚ | × |

As is apparent from Table 2, each of the fuel cell separators produced in Examples 2-1 to 2-7 had a good electrical conductivity, but the fuel cell separator produced in Comparative Example 1-1 had a poor electrical conductivity.

## Claims

1. A method for producing a reclaimed precursor for a fuel cell separator, comprising the steps of preparing a slurry by mixing a fuel cell separator precursor containing graphite particles and a water-soluble resin with an aqueous solvent, and drying the slurry.

2. The method of claim 1 for producing a reclaimed precursor for a fuel cell separator, wherein the fuel cell separator precursor contains a granular or fibrous water-insoluble resin.

3. A method for producing a fuel cell separator, comprising the step of molding the reclaimed precursor for a fuel cell separator obtained by the method of claim 1 or 2.

4. The method of claim 3 for producing a fuel cell separator, wherein the molding step is a hot compression molding step.
